Europäisches Patentamt

European Patent Office

Office européen des brevets

(11) Publication number: 0 376 187 A2

# (12) EUROPEAN PATENT APPLICATION

(21) Application number: 89123741.4

(51) Int. Cl.⁵: C08L 95/00

(22) Date of filing: 22.12.89

(30) Priority: 27.12.88 JP 327665/88
19.10.89 JP 270359/89

(43) Date of publication of application:
04.07.90 Bulletin 90/27

(84) Designated Contracting States:
DE FR GB IT

(71) Applicant: NIPPON STEEL CORPORATION
6-3 Otemachi 2-chome Chiyoda-ku
Tokyo 100(JP)

Applicant: NIPPON STEEL CHEMICAL
CORPORATION
13-16, Ginza 5-chome
Chuo-ku, Tokyo(JP)

(72) Inventor: Shimojo, Kenichi c/o Nippon Steel
Corporation
Hirohata Works 1, Fuji-cho
Hirohata-Ku Himeji-shi Hyogo-ken(JP)
Inventor: Hashimoto, Kiyoshi
9-4-304, Sawami 1-chome Tobata-ku
Kitakyushu-shi Fukuoka-ken(JP)

(74) Representative: Vossius & Partner
Siebertstrasse 4 P.O. Box 86 07 67
D-8000 München 86(DE)

(54) Binder pitch for high-purity carbon material and process for preparing same.

(57) There are provided a binder pitch for a high-purity carbon material having great mechanical strength in which metallic impurities such as boron, vanadium and zinc are present in extremely small amounts, and a process for preparing the binder pitch.

The present invention is directed to a binder pitch for a high-purity carbon material which comprises a pitch and a fine carbon powder and in which the concentrations of quinoline-insoluble matter and ash are adjusted to 4-14% by weight and 0.02% by weight or less, respectively; and a process for preparing a binder pitch for a high-purity carbon material which comprises the steps of mixing 100 parts by weight of a pitch which has been treated so that the concentrations of quinoline-insoluble matter and ash may be 0.1% by weight or less and 0.01% by weight or less, respectively, with 5-15 parts by weight of a fine carbon powder which has a particle diameter of 0.2-50 μm or which will be a particle diameter of 0.2-50 μm in the pitch and in which the ash content is 0.1% by weight or less; and then adjusting the concentrations of the quinoline-insoluble matter and the ash to 4-14% by weight and 0.02% by weight or less, respectively.

## Binder Pitch for High-purity Carbon Material and Process for Preparing Same

The present invention relates to a binder pitch desirable as a raw material for high-purity carbon materials of e.g. walls for nuclear reactors, boards for high-purity metal smelting and electrodes for high-purity aluminum smelting, and it also relates to a process for preparing the binder pitch.

A carbon material is generally prepared as follows: In the first place, an aggregate coke having a regulated grain diameter and a pitch as a binder are sufficiently kneaded in an optional ratio, followed by molding. Successively, the molded raw material is calcined. However, in this calcination step, low-molecular components in the pitch are volatilized therefrom, so that the material has many pores therein, that is, it is porous. Here, in order to increase the bulk density of the porous material by impregnating the latter with the pitch, an impregnation treatment is carried out. After the impregnation treatment, the material is calcined again. The steps of the impregnation and calcination are performed only once or they are repeated several times, and the resulting densified material having less pores is then subjected to graphitization, thereby obtaining the desired products.

In this connection, the pitch for the binder which is the raw material can be prepared by distilling coal tar secondarily produced in a coke oven furnace to remove more volatile components therefrom, and then thermally polymerizing the volatile components-free coal tar so as to regulate the distribution of molecular weight.

On the other hand, in carbon materials used in specific applications such as walls for nuclear reactors, boards for e.g. high-purity metal smelting or electrodes for high-purity aluminum smelting, it is required that the content of metallic impurities, particularly boron, vanadium and zinc is extremely low. Such impurities all in the raw materials are quantitatively measured in the form of ash. Therefore, the lower the content of the ash in the binder pitch for the specific high-purity carbon materials is, the better the quality of the binder pitch is.

The ash is neither introduced nor formed in the course of the manufacturing process of the pitch, but it is contained in the coal tar and remains still in the pitch. Therefore, in order to obtain the pitch containing a smaller amount of the ash, the raw material coal tar in which a small amount of the ash is present is heretofore selectively employed.

JP-B- 29,665/1985 discloses that a coke powder having a small thermal expansion coefficient is added to and dispersed in a usual pitch with the intention of improving bulk density, bending strength and thermal expansion coefficient. However, in this disclosed technique, there is no description of decreasing an ash content in the pitch, and thus such a pitch is undesirable as the binder for the high-purity carbon materials.

If a stable preparation of the pitch with a low ash content is desired, it is necessary to stably secure the raw material coal tar with the low ash content. Furthermore, as the raw material of the coal tar, a blend of various kinds of coals which are naturally different in quality is actually used, and so the ash content in the raw material largely varies. For these reasons, it is very difficult to stably manufacture the pitch with a low ash content.

Most of the ash in the pitch is contained in quinoline-isoluble matter. Therefore, it has been found that when the quinoline-isoluble matter is removed so that concentrations of the quinoline-isoluble matter and the ash may be regulated to be 0.1% by weight or less and 0.01% by weight or less, respectively (hereinafter referred to as "ash removal treatment"), contents of impurities such as metallic components, particularly boron, vanadium and zinc can be controlled to levels of 0.5 ppm or less, 0.2 ppm or less and 1 ppm or less, respectively. However, the quinoline-insoluble matter in the pitch is an important factor which has a great influence on mechanical strength. If a pitch containing no quinoline-insoluble matter is used as the binder for the carbon material, necessary mechanical strength of the carbon material cannot be obtained.

An object of the present invention is to provide a binder pitch in which impurities such as boron, vanadium and zinc are contained in extremely small amounts and which can be used as a raw material for a high-purity carbon material having high mechanical strength.

It has surprisingly been found that when a pitch subjected to an ash removal treatment is mixed with a high-purity fine carbon powder in which an ash content is 0.1% by weight or less, and particularly each content of boron, vanadium and zinc is 1 ppm or less, problems of both strength and purity of products can be simultaneously solved. The present invention has been achieved on the basis of this knowledge.

The subject matter of the present invention therefore is
a binder pitch for a high-purity carbon material which comprises a pitch and a fine carbon powder and in which the concentrations of quinoline-insoluble matter and ash are adjusted to 4-14% by weight and 0.02% by weight or less, respectively.

2

Another subject matter of the present invention is a process for preparing a binder pitch for a high-purity carbon material which comprises the steps of mixing 100 parts by weight of a pitch which has been treated so that the concentrations of quinoline-imsoluble matter and ash may be 0.1% by weight or less and 0.01% by weight or less, respectively, with 5-15 parts by weight of a fine carbon powder which has a particle diameter of 0.2-50 μm or which will be a particle diameter of 0.2-50 μm in the pitch and in which an ash content is 0.1% by weight or less; and then adjusting concentrations of the quinoline-isoluble matter and the ash to 4-14% by weight and 0.02% by weight or less, respectively.

Now, the present invention will be described in detail.

As the fine carbon powder used in the present invention, carbon black and a green coke powder obtained by the delayed coking process oan be utilized in which the particle diameter is from 0.2 to 50 μm, and the ash content is 0.1% by weight or less, and in particular, each content of boron, vanadium and zinc is 1 ppm or less. With regard to the green coke powder, an average particle diameter can be adjusted optionally in the range of from about 1 μm to about 50 μm by controlling grinding conditions. The removal of the ash from the raw material coal tar pitch, i.e., the removal of quinoline-isoluble matter therefrom has been accomplished by, for example, a technique of mixing the pitch with an aromatic solvent and an aliphatic solvent, and then removing the quinoline-insoluble matter in a deposited viscous pitch state which is called pitch zone in the following patents. This ash removal technique is disclosed in JP-B-4,111/1985 and 50,723/1985.

After the ash removal treatment, 5 to 15% by weight of the fine carbon powder which has a particle diameter of 0.2 to 50 μm and in which the ash content is 0.1% by weigh or less is mixed with the thus treated pitch in which the concentration of the quinoline-insoluble matter is 0.1% by weight or less and the ash content is 0.01% by weight or less. Exemplary mixing conditions are set forth in Table 1.

## Table 1

### Mixing Conditions

Apparatus: Autoclave
Time: 1 hour
Temperature: 120-180°C is preferable.
When too low, dispersion is difficult.
When too high, volatile components in pitch volatilize, and quality varies.
Pressure: Atmospheric pressure ($N_2$ atmosphere)
Stirring Speed: 1,000 rpm

If necessary, distillation is carried out in order to adjust a softening point. As a result, a binder pitch for a high-purity carbon material can be obtained which comprises a pitch and a fine carbon powder and in which concentrations of the quinoline-insoluble matter and the ash are from 4 to 14% by weight and 0.02% by weight or less, respectively, and particularly contents of boron, vanadium and zinc are 0.5 ppm or less, 0.2 ppm or less and 1 ppm or less, respectively.

The pieces of the carbon material were prepared by the use of the thus obtained binder pitch, and physical properties were then measured and evaluated. Tests using these test pieces will be described in the following examples.

As discussed above in detail, according to the present invention, a binder pitch for a high-purity oarbon material having high strength can be provided in which the content of ash, particularly contents of boron, vanadium, zinc and the like can be decreased remarkably as compared with a conventional process, the ash content is not affected by the variation of characteristics of coal tar, in other words, the ash content is stable and mechanical strength is also great.

## EXAMPLES

Now, the present invention will be described in detail in reference to examples, but the scope of the

3

present invention should not be limited by these examples.

Example 1

First, 5 parts by weight of carbon black was added to 100 parts by weight of coal tar pitch subjected to an ash removal treatment. In this coal tar pitch, the softening point was 95.5°C, concentrations of quinoline-insoluble matter and toluene-insoluble matter were 0.01% by weight and 15.6% by weight, respectively, and ash content was 0.01% by weight, and contents of boron, vanadium and zinc were 0.3 ppm, 0.2 ppm and 0.5 ppm, respectively. In the above-mentioned carbon black, its average diameter was 0.5 μm, the ash content was 0.07% by weight, and contents of boron, vanadium and zinc were 0.4 ppm, 0.2 ppm and 0.6 ppm, respectively. Afterward, these raw materials were kneaded at a temperature of 150°C for 1 hour by means of a twin- screw kneader. The rotational speed of the kneader was 1,000 rpm. Characteristic values of the pitch are set forth in Table 2.

Next, 32 parts of the thus obtained pitch was kneaded at 150°C together with 100 parts of aggregate coke in which an ash content was 0.03% by weight, and contents of boron, vanadium and zinc were 0.5 ppm, 0.2 ppm and 4.8 ppm, respectivley, and the kneaded material was molded and then calcined at 900°C. Characteristic values of the product are set forth in Table 3.

Example 2

First, 10 parts by weight of green coke prepared by the delayed coking process was added to 100 parts by weight of coal tar pitch subjected to an ash removal treatment. In this coal tar pitch, the softening point was 95.5°C, concentrations of quinoline-insoluble matter and toluene-insoluble matter were 0.01% by weight and 15.6% by weight, respectively, the ash content was 0.01% by weight, and contents boron, vanadium and zinc were 0.3 ppm, 0.2 ppm and 0.5 ppm, respectively. In the above-mentioned green coke, its average diameter was 3.2 μm, and ash content was 0.04% by weight, and contents of boron, vanadium and zinc were 0.5 ppm, 0.2 ppm and 0.7 ppm, respectively. Afterward, these raw materials were kneaded at a temperature of 150°C for 1 hour by means of a twin-screw kneader. The rotational speed of the kneader was 1,000 rpm. Characteristic values of the pitch are set forth in Table 2.

Next, 30 parts of the thus obtained pitch was kneaded at 150°C together with 100 parts of aggregate coke in which an ash content was 0.03% by weight, and contents of boron, vanadium and zinc were 0.5 ppm, 0.2 ppm and 4.8 ppm, respectively, and the kneaded material was molded and then calcined at 900°C. Characteristic values of the calcined product are set forth in Table 3.

Comparative Example 1

One hundred parts by weight of aggregate coke and 30 parts by weight of coal tar pitch subjected to an ash removal treatment were kneaded together, molded at 150°C and calcined at 900°C. In this coal tar pitch, the softening point was 95.5°C, concentrations of quinoline-insoluble matter and toluene-insoluble matter were 0.01% by weight and 15.6% by weight, respectively, the ash content was 0.01% by weight, and contents of boron, vanadium and zinc were 0.3 ppm, 0.2 ppm and 0.5 ppm, respectively. In the above-mentioned aggregate coke, ash content was 0.03% by weight, and contents of boron, vanadium and zinc were 0.5 ppm, 0.2 ppm and 4.8 ppm, respectively. Characteristic values of the calcined product are set forth in Table 3.

Comparative Example 2

One hundred parts by weight of aggregate coke and 29 parts by weight of coal tar pitch not subjected to an ash removal treatment were kneaded together, molded at 150°C and calcined at 900°C. In this coal tar pitch, the softening point was 95°C, concentrations of quinoline-insoluble matter and toluene-insoluble matter were 9.6% by weight and 31.3% by weight, respectively, the ash content was 0.14% by weight, and contents of boron, vanadium and zinc were 1.0 ppm, 0.2 ppm and 66 ppm, respectively. In the above-mentioned aggregate coke, the ash content was 0.03% by weight, and contents of boron, vanadium and zinc were 0.5 ppm, 0.2 ppm and 4.8 ppm, respectively. Characteristic values of the calcined product are set forth in Table 3.

Table 2

|  | Quinoline-Insoluble Matter (%) | Toluene-Insoluble Matter (%) | Ash (%) | Values of Elemental Analysis (ppm) | | |
|---|---|---|---|---|---|---|
|  |  |  |  | Boron | Vanadium | Zinc |
| Example 1 | 6.4 | 22.5 | 0.01 | 0.4 | 0.2 | 0.4 |
| Example 2 | 8.2 | 26.1 | 0.01 | 0.4 | 0.2 | 0.6 |
| Comp. Ex. 1 | 0.01 | 15.6 | 0.01 | 0.3 | 0.2 | 0.5 |
| Comp. Ex. 2 | 9.6 | 31.3 | 0.14 | 1.0 | 0.2 | 66 |

Table 3

|  | Bending Strength of Calcined Product (kg/cm$^2$) | Values of Elemental Analysis (ppm) | | |
|---|---|---|---|---|
|  |  | Boron | Vanadium | Zinc |
| Example 1 | 111 | 0.6 | 0.2 | - |
| Example 2 | 116 | 0.6 | 0.3 | - |
| Comp. Ex. 1 | 96 | 0.4 | 0.3 | - |
| Comp. Ex. 2 | 115 | 1.1 | 0.2 | - |

In Examples 1 and 2, bending strength is substantially equal to that of Comparative Example 2, and nevertheless the ash content decreases noticeably. Furthermore, the results of Comparative Example 1 indicate that when the pitch subjected to the quinoline-insoluble matter removal treatment is only used without mixing a fine carbon matter, required mechanical strength (bending strength) of the carbon material is very low.

**Claims**

1. A binder pitch for a high-purity carbon material which comprises a pitch and a fine carbon powder and in which the concentrations of quinoline-isoluble matter and ash are adjusted to 4-14% by weight and 0.02% weight or less, respectively.

2. A process for preparing a binder pitch for a high-purity carbon material which comprises the steps of mixing 100 parts by weight of a pitch which has been treated so that the concentrations of quinoline-insoluble matter and ash may be 0.1% by weight or less and 0.01% by weight or less, respectively, with 5-15 parts by weight of a fine carbon powder which has a particle diameter of 0.2-50 μm or which will be a particle diameter of 0.2-50 μm in said pitch and in which the ash content is 0.1% by weight or less; and then adjusting the concentrations of quinoline-insoluble matter and ash to 4-14% by weight and 0.02% by weight or less, respectively.